# EUROPÄISCHE PATENTANMELDUNG

(11) **EP 2 133 640 A2**
(43) Veröffentlichungstag der Anmeldung: **16.12.2009**
(21) Anmeldenummer: 09007293.5
(22) Anmeldetag: 02.06.2009
(51) Int. Cl.: F25D 3/08

(54) **Behältnis zum Kühlen eines fluiden Mediums**

(30) Priorität: 10.06.2008 DE 102008027536
(71) Anmelder: Nürnberg Gummi Babyartikel GmbH & Co. KG, 91166 Georgensgmünd (DE)
(72) Erfinder: Bührle, Matthäus, 91166 Georgensgmünd (DE)
(74) Vertreter: Blaumeier, Jörg

(57) **Zusammenfassung**

Behältnis zum Kühlen eines fluiden Nahrungsmittels, in dem wenigstens ein erstes Abteil (3) zur Aufnahme eines oder enthaltend ein Kühlmittel und wenigstens ein an das erste Abteil (3) unmittelbar angrenzendes zweites Abteil (4) zur Aufnahme des zu kühlenden, während des Kühlvorgangs ruhenden Nahrungsmittels ausgebildet ist, und das bodenseitig ein dem bis auf eine Einfüllöffnung für das Nahrungsmittel geschlossene zweiten Abteil (4) zugeordnetes und durch Aufsetzen des Behältnisses (1) auf ein Gefäß (26) automatisch öffenbares, das Ablaufen des Nahrungsmittels in das Gefäß (26) ermöglichendes Ventil (16) aufweist.

## Beschreibung

Die Erfindung betrifft ein Behältnis zum Kühlen eines fluiden Nahrungsmittels.

Vor allem zur Zubereitung von Baby- und Kleinkindemahrung wie beispielsweise von Folgemilch, Tee oder warmen Wasser wird üblicherweise sehr heißes, zumeist frisch abgekochtes Wasser verwendet, was dazu führt, dass das hergestellte Nahrungsmittel gleich welcher Art sehr heiß ist und noch nicht die zum Verzehr durch das Baby oder Kleinkind geeignete Temperatur aufweist. Zu diesem Zweck ist es erforderlich, das Nahrungsmittel möglichst schnell auf eine Trinktemperatur zu kühlen, oder auf eine Temperatur, um z. B. Milchpulver einzurühren etc.

Aus WO 2006/097436 A1 ist eine Vorrichtung zum Kühlen eines heißen flüssigen Nahrungsmittels auf eine Trinktemperatur bekannt, die aus drei funktionell aufeinander abgestimmten Behälinissen besteht. Zum einen aus einem mittig anzuordnenden Kühlaggregat, bestehen aus einem behältnisartigen Hohlkörper, der mit einem Kühlmittel, z. B. Wasser gefüllt wird, und durch den sich eine Kühlwendel erstreckt, die von einem Einlass zu einem Auslass läuft. An der einen Seite des Kühlaggregats, die den Kühlwendeleinlass aufweist, ist ein Aufnahmeabschnitt für einen ersten Behälter vorgesehen, der beispielsweise das heiße, gerade abgekochte Wasser enthält. An der anderen, den Auslass aufweisenden Seite ist ein Aufnahmeabschnitt für einen zweiten Behälter vorgesehen, in den das die Kühlwendel durchlaufene Wasser oder dergleichen hineinläuft. Zur Kühlung wird zunächst frisch abgekochtes Wasser in den ersten Aufnahmebehälter eingeschüttet, wonach auf diesen gefüllten Behälter das Kühlaggregat flüssigkeitsdicht aufgesetzt wird, so dass der Kühlwendeleinlass mit dem Wasserbehälter verbunden ist. So dann wird auf die andere Seite der zweite Behälter aufgesetzt und flüssigkeitsdicht mit dem Kühlaggregat verbunden, so dass der Auslass mit diesem Behälter kommuniziert. Anschließend wird dieser beachtliche hohe Aufbau umgedreht, so dass der wassergefüllte erste Behälter der oberste Behälter ist und das Wasser in die Kühlwendel eindringen und in den unteren, noch leeren Behälter laufen kann.

Zwar kann hierdurch eine Kühlung erreicht werden, jedoch sind mit dieser Vorrichtung einige Nachteile verbunden. Zum einen benötigt sie bereits drei separat konfigurierte und funktional exakt aufeinander abgestimmte Behältnisse, ist also sehr aufwendig konzipiert. Weiterhin besteht die Gefahr, dass unmittelbar nach dem Umdrehen die gesamte Vorrichtung sehr leicht kippen kann, nachdem der Schwerpunkt sehr hoch liegt, da das wassergefüllte Behältnis nunmehr oben positioniert ist. Auch ist unbedingt darauf zu achten, dass das Kühlaggregat und der erste, das kochende Wasser enthaltende Behälter zwingend dicht miteinander verbunden sind, um zu vermeiden, dass das heiße Wasser nach dem Umdrehen herausläuft, wie natürlich grundsätzlich auch beim Aufschrauben des Kühlaggregats auf den das heiße Wasser enthaltenden ersten Behälter eine Verbrühungsgefahr gegeben ist. Auch kann infolge der Wendelfrom der Kühlstrecke diese nur schwer gereinigt werden.

Der Erfindung liegt damit das Problem zugrunde, eine Kühlvorrichtung für ein fluides Nahrungsmittel gleich welcher Art anzugeben, das einfach und sicher handzuhaben ist und gleichwohl für eine gute Kühlung sorgt.

Zur Lösung dieses Problems ist ein Behältnis zum Kühlen eines fluiden Nahrungsmittels vorgesehen, in dem wenigstens ein erstes Abteil zur Aufnahme eines oder enthaltend ein Kühlmittel und wenigstens ein an das erste Abteil unmittelbar angrenzendes zweites Abteil zur Aufnahme des zu kühlenden, während des Kühlvorgangs ruhenden Nahrungsmittels ausgebildet ist, und das bodenseitig ein dem bis auf eine Einfüllöffnung für das Nahrungsmittel geschlossenen zweiten Abteil zugeordnetes und durch Aufsetzen des Behältnisses auf ein Gefäß automatisch öffenbares, das Ablaufen des Nahrungsmittels in das Gefäß ermöglichendes Ventil aufweist.

Das erfindungsgemäße Behältnis respektive die erfindungsgemäße Kühlvorrichtung umfasst lediglich dieses eine Behältnis, das zur Aufnahme des Kühlmittels sowie des zu kühlenden Nahrungsmittel dient, wobei die Abgabe in ein anderes Gefäß erst dann erfolgt, wenn das während des Kühlvorgangs ruhende Nahrungsmittel hinreichend abgekühlt ist. Hierzu sind behälterseitig zwei separate, voneinander flüssigkeitsdicht getrennte Abteile vorgesehen, die jedoch unmittelbar aneinander angrenzen, so dass über die Grenzfläche respektive die die Abteile trennende möglichst großflächige Trennwand ein sehr guter und schneller Wärmeaustausch erfolgen kann. Im einen Abteil, beispielsweise bei konzentrischer Abteilausbildung im äußeren Abteil, befindet sich das Kühlmittel, beispielsweise Wasser. Dieses kann entweder erst vor dem eigentlichen Kühlvorgang eingefüllt worden sein, es kann jedoch auch bereits seit längerer Zeit darin aufgenommen sein. Das Behältnis selbst kann vorher in einem Kühlschrank gestanden haben um das Kühlmittel selbst hinreichend herabzukühlen (im Kühlschrank auf ca. 4° - 8°).
Das zweite, vorzugsweise mittig angeordnete Abteil dient sodann zur Aufnahme des Nahrungsmittels, beispielsweise heißes Wasser. Das heiße Wasser wird in das zweite Abteil eingeschüttet, gegebenenfalls kann bereits dem Wasser z. B. Milchpulver, Tee oder dergleichen zugesetzt werden, sofern dies nicht vorher bereits erfolgt ist. In jedem Fall beginnt unmittelbar mit dem Einfüllen des flüssigen Nahrungsmittels auch der Kühlvorgang, etwaige sonstige Handlungen sind hierfür nicht erforderlich, nachdem sich das Kühlmittel und das zu kühlende Nahrungsmittel bereits in "Kühlkontakt' befinden. Während des Kühlens verbleibt das Nahrungsmittel unbewegt im zweiten Abteil, d. h., das Behältnis steht, so dass während des gesamten Kühlvorgangs keinerlei Verbrühungsgefahr oder sonstige Unfallgefahr gegeben ist. Nach Ablauf einer vorbestimmten Zeit, innerhalb welcher das Nahrungsmittel die gewünschte Temperatur aufweist (diese Standzeit ist abhängig von der Art des zu kühlenden Nahrungsmittels, der eingefüllten Nahrungsmittelmenge, sowie der Art und Temperatur des Kühlmediums) kann das gekühlte Nahrungsmittel entnommen werden, was über ein bodenseitig vorgesehenes Ventil erfolgt. Um dieses Ventil zu öffnen ist es lediglich erforderlich, das Behältnis auf ein Gefäß wie beispielsweise ein Babyfläschchen oder dergleichen, aus dem das Baby oder Kleinkind das Nahrungsmittel zu sich nehmen soll, aufzusetzen. Über dieses Gefäß wird das Ventil automatisch beim Aufsetzen geöffnet. Das Behältnis wird also auf den oberen Fläschchenrand aufgestellt, der Fläschchenrand selbst wirkt mit dem Ventil zusammen und öffnet dieses, so dass das gekühlte Nahrungsmittel in das Fläschchen laufen kann. Wird das Behältnis wieder angehoben, so schließt sich sofort das Ventil wieder flüssigkeitsdicht.

Ingesamt ist das erfindungsgemäße Kühlbehältnis respektive die erfindungsgemäße Kühlvorrichtung wesentlichen einfacher konzipiert als bisher im Stand der Technik bekannte Einrichtungen. Zum einen ist lediglich ein einziges, in wenigstens zwei separate Abteile unterteiltes Behältnis erforderlich, das den entsprechenden Ventilmechanismus aufweist. Zum anderen besteht keine Verbrennungs-oder Unfallgefahr, nachdem sowohl zum Vorbereiten als auch während des Kühlvorgangs das Behältnis auf der Unterlage steht und nicht bewegt werden muss. Lediglich zur Abgabe ist das Behältnis auf das Aufnahmegefäß zu setzen. Die Handhabung ist also wesentlich vereinfacht, wie auch die Reinigung, nachdem das Behältnis selbst mit insbesondere seinem das Nahrungsmittel aufnehmenden Abteil äußerst einfach zugänglich ist, da es lediglich eine oberseitige, möglichst großflächige Öffnung aufweist, in die das Nahrungsmittel eingeschüttet werden kann. Das Ventil selbst ist beim Reinigen auf einfache Weise zu durchspülen.

Zur Bildung der beiden Abteile ist das Behältnis zweckmäßigerweise doppelwandig ausgebildet, wobei das zweite Abteil innen liegt. Es ist also wie beschrieben bevorzugt ein konzentrischer Aufbau realisiert, die beiden Abteile sind über eine zylindrische Innenwand voneinander getrennt, wobei diese zylindrische Innenwand aus einem einen möglichst hohen Wärmeübergangswert aufweisenden Material (z. B. Aluminium) besteht. Zur Vergrößerung der Kühlflächen können im zweiten Abteil ein oder mehrere Kühlrippen vorgesehen sein, d. h., dass die beide Abteile trennende Wand nach innen ragende Kühlrippen aufweist, die ebenfalls der Kühlung dienen. Bei dem beschriebenen konzentrischen Aufbau können diese Kühlrippen beispielsweise um 1 - 2 cm nach innen ragen. Solche Kühlrippen können auch im ersten Abschnitt vorgesehen sein, sie sind dann thermisch mit dem zweiten Abteil verbunden, z. B. an der Trennwand nach außen ragend angeformt.

Wie beschrieben wird das Ventil ausschließlich durch den oberen Rand des aufzusetzenden Gefäßes betätigt. Um diese Betätigung möglichst einfach und sicher zu gestalten weist das Ventil einen im Wesentlichen parallel zum Behältnisboden verlaufenden, vertikal bewegbaren Betätigungsabschnitt auf, der mit dem Gefäß zusammenwirkt. Dieser Betätigungsabschnitt kann zweckmäßigerweise über zwei oder mehrere, sich seitlich erstreckende Arme realisiert sein, wobei dieser Betätigungsabschnitt respektive das Ventil hierbei vertikal bewegbar in entsprechenden Führungen am Boden aufgenommen bzw. geführt sind. Dieser Betätigungsabschnitt, der beispielsweise auch scheibenförmig ausgeführt sein könnte, bietet die Gewähr, dass der obere Rand des Gefäßes, auf das das Behältnis aufgesetzt wird, auch tatsächlich mit dem Ventil zusammenwirkt. Hierüber kann natürlich auch unterschiedlichen Gefäßdurchmessem im Bereich des oberen Randes Rechnung getragen werden, so dass auch unterschiedliche Gefäßtypen geeignet sind, das Ventil zu betätigen.

Zweckmäßigerweise ist bodenseitig eine Vertiefung vorgesehen, in der der Betätigungsabschnitt aufgenommen ist, so dass vermieden wird, dass der Betätigungsabschnitt bei Aufstellen des Behältnisses auf eine ebene Unterlage betätigt wird. Bodenseitig können weiterhin mehrere Auflageabschnitte für das den Betätigungsabschnitt betätigende Gefäß vorgesehen sein, die quasi wegbegrenzend sind und das Behältnis auf dem Gefäßrand auflagern, wenn das Ventil hinreichend weit geöffnet ist.

Um der unterschiedlichen Viskosität des Nahrungsmittels (Wasser, Brei etc.) oder auch möglichen lnhaltsstoffen des Nahrungsmittels (kleine Flocken oder Körner) Rechnung zu tragen, ist zweckmäßigerweise der Öffnungsquerschnitt des Ventils veränderbar. D. h., dass bei Kühlen eines zähflüssigeren Nahrungsmittels wie eines Brei ein solches Ventil verwendet werden kann respektive der Öffnungsquerschnitt so eingestellt werden kann, dass sich das Ventil weiter öffnet als bei Kühlung reinen Wassers. Diese Querschnittsveränderung kann beispielsweise dadurch erfolgen, dass der den Öffnungsquerschnitt bestimmende Betätigungsabschnitt austauschbar ist. Der Betätigungsabschnitt, der vorzugsweise lösbar mit einer Ventildichtung verbunden ist, hebt diese Ventildichtung an und gibt hierüber das Ventil frei, wobei der Öffnungsgrad des Ventils letztlich über den Betätigungsabschnitt definiert wird. Kann dieser nun ausgetauscht werden, so kann bei fest vorgegebenem Ventilbohrungsdurchmessern letztlich der Öffnungsgrad verändert werden.

Das Behältnis selbst weist zweckmäßigerweise ein aus Kunststoff bestehendes Außenteil und ein aus Metall, insbesondere Aluminium bestehendes Innenteil, das die beiden Abteile trennt, auf. Das Außenteil ist aus Kunststoff sehr günstig herstellbar, während das Innenteil, vorzugsweise aus Aluminium gebildet, sehr gut wärmeleitfähig ist. Alternativ kann das Behältnis auch komplett aus Metall sein. Ferner kann außenseitig eine Isolierung vorgesehen sein, z. B. eine Beschichtung oder eine entsprechende Kunststoffumhüllung bei Herstellung des kompletten Behältnisses aus Metall, oder eine Überzugsfolie oder dergleichen.

Sofern ein separates metallenes Innenteil zum Einsatz kommt, ist dieses auf einfache Weise an einer am Behältnisboden vorgesehenen zentrierenden Halterung, vorzugsweise klemmend, lösbar fixiert. Es kann also zu Reinigungszwecken entnommen werden. Zweckmäßigerweise ist in diesem Bereich eine Dichtung, z.B. ein ebenfalls entnehmbarer O-Dichtring, vorgesehen, über die die Abdichtung beider über das Innenteil getrennter Abteile erfolgt.

Ferner kann das erste Abteil mittels eines Deckels verschließbar sein, insbesondere bei außenliegendem Abteil mittels eines ringförmigen Deckels. Dieser fest und flüssigkeitsdicht aufschnappbare Deckel kann, wenn das erste Abteil einmal beispielsweise mit Wasser gefüllt ist, quasi permanent aufgesetzt bleiben, nachdem das Wasser als Kühlmittel letztlich nicht weiter auszutauschen ist. Es ist verlustfrei im ersten Abteil aufgenommen und kann wie beschrieben durch Einstellen des Behältnisses in einen Kühlschrank heruntergekühlt werden. Ein Nachfüllen ist in den seltensten Fällen erforderlich. Gleichwohl kann selbstverständlich für jeden Kühlvorgang frisches Kühlmittel verwendet werden. Denkbare wäre es grundsätzlich aber auch, das erste Abteil vollständig zu verschließen und lediglich eine ventilartige Nachfüllöffnung vorzusehen. Dies bietet sich insbesondere dann an, wenn als Kühlmittel beispielsweise ein Wasser-Ethanol-Gemisch oder dergleichen verwendet wird.

Kommt ein Deckel und ein Innenteil zum Einsatz, so ist zur Halterung des Innenteils am Deckel ebenfalls eine vorzugsweise zentrierende Halterung vorgesehen, an der das Innenteil vorzugsweise klemmend lösbar fixiert ist. Beim Aufsetzen des Deckels greift die Halterung automatisch am oberen Rand des Innenteils an und klemmt dieses gegen die untere Halterung.

In vorteilhafter Weiterbildung kann ferner ein am Deckel des ersten Abteils vorgesehener und sich vom Behältnis weg erstreckender zylindrischer Ansatz vorgesehen sein, der einen Aufnahmeraum für das fluide Nahrungsmittel bildet und der eine Öffnung zum zweiten Abteil aufweist. Das Nahrungsmittel kann somit sowohl in das zweite Abteil als auch den darüber befindlichen Aufnahmeraum gefüllt werden, aus dem es im Falle einer Entnahme aus dem zweiten Abteil in das zweite Abteil weitertließt. Es kann also mehr Flüssigkeit eingefüllt werden, als das zweite Abteil allein aufnimmt.

Auch das zweite Abteil kann mittels eines Deckels verschließbar sein, insbesondere bei innenliegendem Abteil mittels eines scheibenförmigen Deckels, der bei Verwendung eines ringförmigen Deckels für das äußere Abteil gegebenenfalls auch an diesem fixiert werden kann.

Zweckmäßigerweise ist ferner im ersten Abteil und/oder im Aufnahmeraum eine Füllstandshöhenanzeige vorgesehen. Über diese Füllstandshöhenanzeige, die beispielsweise in Form mehrerer vorspringender Rippen ausgebildet sein kann, kann der Benutzer genau erkennen, wie viel Kühlmittel er eingefüllt hat. Beispielsweise sind zwei Rippen vor-gesehen, eine niedrigere und eine höhere, die jeweils definierte Füllstandshöhen anzeigen. Selbstverständlich kann auch im zweiten Abteile eine Füllstandshöhenanzeige vorgesehen sein, dort bevorzugt in Form einer die eingefüllten Milliliter angebende Skala.

Sofern das Behältnis auf ein Gefäß aufgesetzt werden soll, dessen oberer Randdurchmesser so groß ist, dass der Betätigungsabschnitt des Ventils nicht ergriffen und vertikal bewegt wird, sieht eine zweckmäßige Weiterbildung der Erfindung die Verwendung eines separaten Adapters vor, der dem erfindungsgemäßen Behältnis zugeordnet ist, und der auf ein Gefäß aufzusetzen ist, dessen oberer Randdurchmesser nicht geeignet ist, den Gefäßabschnitt zu ergreifen, welcher Adapter einen vorzugsweise ringförmigen oberen Rand zum Betätigen des Betätigungsabschnitts aufweist. Das heißt, das über diesen Adapter beliebige Gefäße mit dem Behältnis "verbunden" werden können.

Weiter Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivansicht des erfindungsgemäßen Behältnisses von oben,
- Fig. 2: eine Perspektivansicht des erfindungsgemäßen Behältnisses von unten,
- Fig. 3: eine Querschnittsansicht durch das Behältnis,
- Fig.4: eine weitere Querschnittsansicht um 90° gedreht durch das erfindungsgemäße Behältnis,
- Fig. 5: eine Untenansicht des Behältnisses,
- Fig. 6: eine Darstellung des auf ein Aufnahmegefäß aufgesetzten Behältnisses zur Entnahme des gekühlten Nahrungsmittels,
- Fig. 7: eine Schnittansicht durch ein Gefäß mit aufgesetztem Adapter, und
- Fig. 8: eine Schnittansicht durch ein Behältnis einer weiteren Ausführungsform.

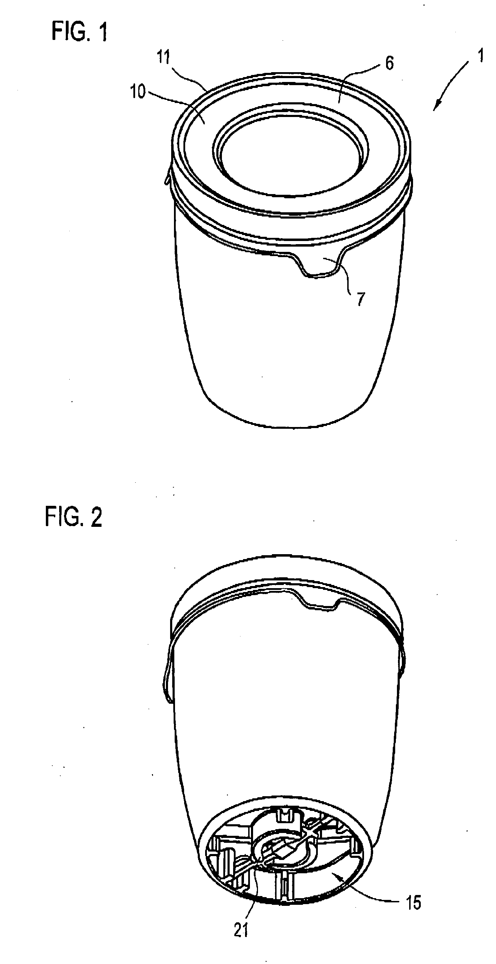

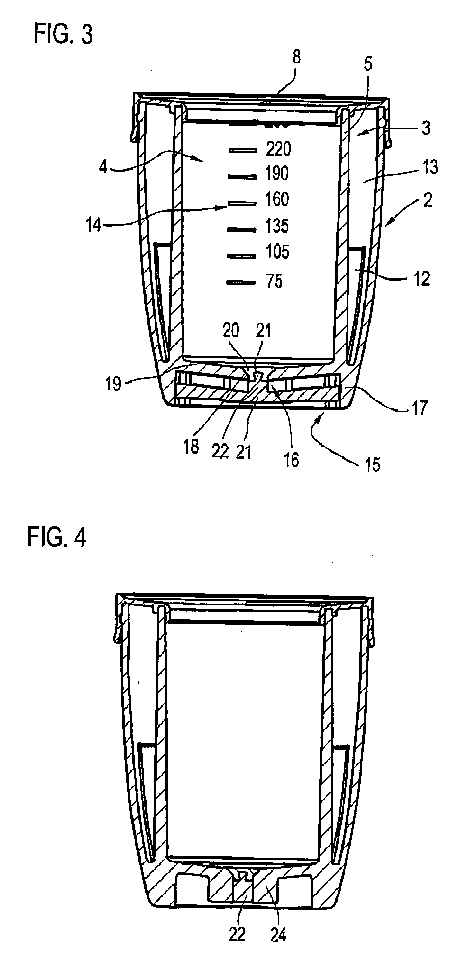

Fig.1 zeigt eine erfindungsgemäßes Behältnis 1, bestehend aus einem Behältniskörper 2 (siehe Fig. 3), in dem zwei Abteile, nämlich ein erstes Abteil 3 zur Aufnahme eines Kühlmittels und ein zweites Abteil zur Aufnahme eines zu kühlenden flüssigen Nahrungsmittels ausgebildet sind. Diese beiden Abteile 3, 4 sind mittels einer zylindrischen Trennwand 5 voneinander getrennt und konzentrisch zueinander realisiert. Im gezeigten Ausführungsbeispiel ist auf das erste Abteil 3, das grundsätzlich von oben zugänglich ist, ein ringförmiger Deckel 6 aufgeschnappt, der seitliche Laschen 7 aufweist, um ihn leichter zu entnehmen. Grundsätzlich kann (siehe z. B, Fig. 3) ein zweiter scheibenförmiger Deckel 8 auch auf das zweite Abteil 4 zum Abdecken der großen Einfüllöffnung aufgesetzt werden, wobei dieser scheibenförmige Deckel 8 in einer entsprechenden über einen Ringvorsprung 11 begrenzten Halteabschnitt an dem ersten Deckel 6 fixiert wird. Der erste Deckel 6 weist eine leicht schräg nach innen verlaufende Oberfläche 10 auf, die von dem Ringvorsprung 11 begrenzt ist. Hierüber wird sichergestellt, dass in das zweite Abteil 4 eingefülltes Nahrungsmittel, sollte es zur Seite verschüttet werden, nach innen fließt.

Der Körper 2 ist vorzugsweise aus Metall, insbesondere Aluminium, gefertigt, wobei Aluminium insbesondere zur Bildung der Trennwand 5 vorteilhaft ist, nachdem Aluminium eine sehr gute Wärmeleitfähigkeit aufweist und Ziel dieser Ausgestaltung ja ist, dass die Wärme des in das zweite Abteil 4 eingefüllten heißen Nahrungsmfttels (z. B. frisch abgekochtes Wasser) möglichst schnell über die Trennwand 5 in das Kühlmittel im ersten Abteil 3 abgegeben wird.

Wie Fig. 3 ferner zeigt, sind im Bereich des ersten Abteils 3 Füllstandshöhenanzeigen in Form vorspringender Rippen 12 und 13 vorgesehen, die unterschiedliche Füllstandshöhen definieren, Im Bereich des zweiten Abteils 4 ist an dessen Innenseite ebenfalls eine Füllstandshöhenanzeige 14 in Form entsprechender Milliliterangaben vorgesehen.

Am Boden des Behältnisses 1 ist eine Vertiefung 15 vorgesehen, wie auch ein Ventil 16. Zur Realisierung der Vertiefung ist ein umlaufender Ringvorsprung 17 realisiert, das Ventil 16 ist zum einen über eine Ventilbohrung 18 im Boden 19 des Behältnisses sowie zum anderen über eine Ventildichtung 20 z. B. aus Kunststoff oder Gummi realisiert. Die Ventildichtung 20 ist mit einem Betätigungsabschnitt 21 verbunden, der einen mittleren Abschnitt 22 aufweist, der über eine Rastnase fest, jedoch lösbar mit der Ventildichtung 20 verbunden ist. Von dem mittleren Abschnitt 22 erstrecken sich zwei Arme 23 zur Seite, sie dienen der Betätigung des Ventils 16, um dieses zu öffnen.

Der mittlere Abschnitt 22 ist in einer bodenseitig ausgebildeten Führung 24 aufgenommen, in entsprechenden Führungen 25 sind auch die beiden Arme 23 aufgenommen, so dass insgesamt eine geführte vertikale Bewegbarkeit des Betätigungsabschnitts 21 und damit auch der Ventildichtung 20 ergibt. Der Öffnungsquerschnitt des Ventils 16 kann letztlich dadurch variiert werden, dass die Dicke des mittleren Abschnitts 22 des Betätigungsabschnitts 21 verändert werden kann. Beim Öffnen des Ventils wird dieser Abschnitt 22 in die Durchlassbohrung 18 hineingedrückt, wodurch die Ventildichtung 20 angehoben wird. Der Öffnungsquerschnitt wird nun letztlich von der Dicke des Abschnitts 22 definiert. Wird dieser schmäler gewählt, ist der Öffnungsabschnitt größer, so dass zähflüssigeres Nahrungsmittel wie beispielsweise Brei leichter ausfließen kann. Dies ist auf einfache Weise dadurch einstellbar, dass der Betätigungsabschnitt 21 und die Ventildichtung 20 lösbar miteinander verbunden sind, d. h., dass ohne Weiteres bei Bedarf ein anderer Betätigungsabschnitt 21 angesteckt werden kann.

Die Funktion des Behältnisses ist nun derart, dass nach vorhergehendem Einfüllen eines Kühlmittels wie beispielsweise Wasser in das erste Abteil und z. B. Einbringen des Behältnisses 1 in einen Kühlschrank zum Vorkühlen des Kühlmittels in das zweite Abteil 4 beispielsweise frisch abgekochtes Wasser eingefüllt wird. Unmittelbar mit dem Einfüllen beginnt die Kühlwirkung, d. h., dass die Wärme des heißen Wassers über die Trennwand 5 zum Kühlmittel im ersten Abteil 3 abgeführt wird. Während dieses Kühlvorgangs steht das Behältnis 1 auf einer ebenen Auflage. Durch Wahl der Menge des zu kühlenden Nahrungsmittels sowie des Kühlmediums respektive dessen Menge kann die Zieltemperatur hinreichend genau in Verbindung mit einer entsprechenden Standzeit vorbestimmt werden. Als Hilfestellung hinsichtlich der zu erreichenden Zieltemperatur und der erforderlichen Standzeit kann dem Anwender beispielsweise eine Tabelle an die Hand gegeben werden.

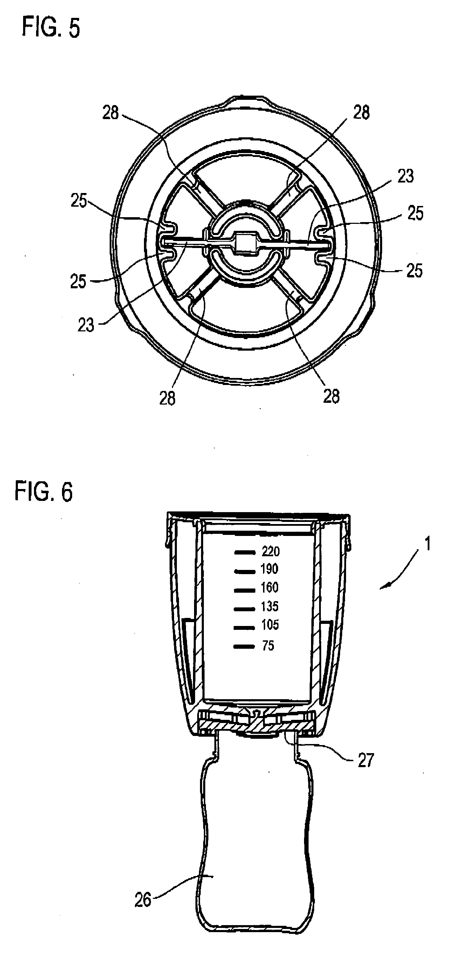

Ist die Zieltemperatur erreicht, ist das Nahrungsmittel zu entnehmen. Hierzu ist es lediglich erforderlich, das Behältnis 1 auf ein Gefäß 26 aufzustellen, im gezeigten Beispiel gemäß Fig. 6 ein Babyfläschchen. Dieses greift mit seinem oberen Rand 27 in die Vertiefung 15 am Behältnisboden ein und legt sich beim Aufsetzen des Behältnisses 1 an den Betätigungsabschnitt 21 an. Wird das Behältnis 1 vollständig aufgesetzt, so drückt der Gefäßrand 27 den Betätigungsabschnitt 21 samt Ventildichtung 20 nach oben, das Ventil 16 wird folglich geöffnet und das gekühlte Nahrungsmittel kann durch das Ventil 16 in das Gefäß 26 laufen. Nach teilweise oder vollständiger Entnahme ist lediglich das Behältnis 1 wieder herunterzunehmen, das gekühlte Nahrungsmittel befindet sich nun im Behältnis 26 und kann ohne Weiteres zur Herstellung von Folgemilch oder von Brei oder dergleichen sofern nicht bereits geschehen, verwendet werden respektive dem Baby zum Verzehr gegeben werden.

Die Dichtheit des Ventils 16 bzw. sein Schließen wird bereits durch eine eingefüllte Flüssigkeitsmenge sichergestellt. D. h., dass die Flüssigkeitssäule, die auf die Ventildichtung 20 drückt, automatisch zum Schließen des Ventils führt. Denkbar ist es aber selbstverständlich auch, zusätzlich ein Rückstellelement vorzusehen, über das das Ventilelement 16 stets geschlossen wird und gegen das der Betätigungsabschnitt vertikal nach oben zum Öffnen des Ventils zu bewegen ist. Denkbar ist hier beispielsweise eine einfache Feder oder ein sonstiges elastisches Element, gegen das der Betätigungsabschnitt 21 beim Aufstellen auf das Gefäß 26 bewegt wird, und das eine hinreichende Rückstellkraft aufbaut, um den Betätigungsabschnitt 21 und mit ihm die Ventildichtung 20 beim Entlasten des Behältnisses sofort wieder in die Schließstellung zurückdrängt.

Bodenseitig sind ferner mehrere Auflagerippen 28 gezeigt, die den Gefäßrand 27 nach Erreichen der Öffnungsstellung des Ventils 16 auflagern.

Das erfindungsgemäße Behältnis ist ersichtlich äußerst einfach konzipiert und handzuhaben. Es lässt insbesondere das Erreichen nahezu beliebiger Kühltemperaturen zu, nachdem die Kühlung bei ruhendem Nahrungsmittel erfolgt, folglich die Kühlzeit beliebig gewählt werden kann. Infolgedessen ist es ohne Weiteres möglich, beispielsweise die von der WHO seit 2007 empfohlene Einmischtemperatur für Folgemilch, die nunmehr > 70°C sein sollte, mit dem erfindungsgemäßen Behältnis einstellen zu können, ausgehend von frisch abgekochtem Wasser. Neben der einfachen Reinigbarkeit ist ferner keine Unfallgefahr mehr gegeben, nachdem wie beschrieben das Behältnis während des Kühlens steht und erst zur Entnahme auf das Gefäß aufzusetzen ist. Ferner kann auch ein nahezu beliebiges Gefäß zur Aufnahme des gekühlten Nahrungsmittels verwendet werden, solange sein Randdurchmesser kleiner ist als der Durchmesser der Vertiefung 15.

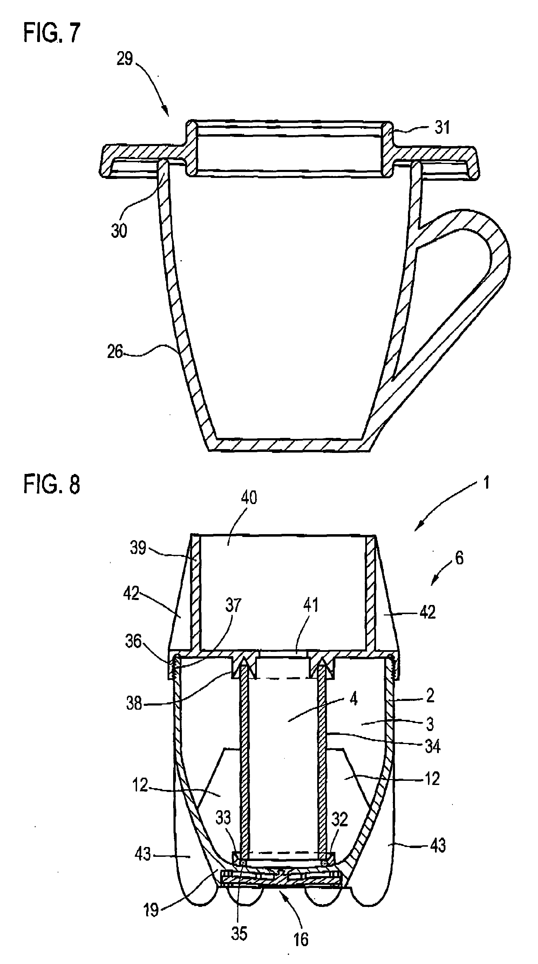

Fig. 7 zeigt schließlich einen Adapter 29, der auf ein Gefäß 26 aufgesetzt ist, das einen oberen Rand 30 aufweist, dessen Durchmesser größer ist als der maximale Durchmesser beziehungsweise die maximale Größe des Betätigungsabschnitts 21 des Behältnisses. Das heißt, dass über den Rand 30 des Gefäßes 26 der Betätigungsabschnitt 21 nicht betätigt werden kann. Der Adapter 29, der einen relativ großen Durchmesser aufweist, so dass er auch auf sehr große beziehungsweise weit geöffnete Behältnisse 26 aufgesetzt werden kann, weist einen oberen Rand 31, vorzugsweise in Ringform, auf, dessen Durchmesser so gewählt ist, dass er mit dem Betätigungsabschnitt 21 des Behältnisses 1 zusammenwirken kann. Dies bietet die Möglichkeit, mit dem erfindungsgemäßen Behältnis 1 nahezu jedwedes Gefäß über den Adapter 29 in Verbindung bringen zu können.

Fig. 8 zeigt ein weiteres erfindungsgemäßes Behältnis 1, wobei soweit möglich für gleiche Bauteile die gleichen Bezugszeichen wie in den zuvor beschriebenen Figuren verwendet werden. Das hier gezeigte Behältnis 1 besteht aus einem Behältniskörper 2, der hier das Behältnisäußere, also die Behältnisaußenwand bildet, die die Außenwand des ersten Abteils 3 bildet. Am Boden 19 des Behältnisses ist innenwandseitig eine zentrierende Halterung 32 in Form eines umlaufenden Rings vorgesehen, der eine schräg nach innen laufende, der Führung des einzusetzenden Innenteils 34 dienende Randkante 33 aufweist. Der Ring dient der Klemmhalterung eines Innenteils 34, das hier aus Metall, vorzugsweise Aluminium, ist und über das das erste Abteil 3 und das zweite Abteil 4 voneinander getrennt werden. Das Innenteil 34 ist über ein Dichtelement 35, beispielsweise eine O-RingDichtung, zum Behältnisboden 19 abgedichtet. Es kann aus diesem Klemmsitz ohne weiteres zu Reinigungszwecken entnommen werden. Die Ausgestaltung des Ventils 16 entspricht der Ausgestaltung des Ventils der zuvor beschriebenen Ausführungsform und wird hier nicht im Detail näher erläutert. In jedem Fall wirkt das Ventil mit dem zweiten Abteil 4 zusammen, so dass darin befindliches gekühltes Nahrungsmittel entnommen werden kann.

Gezeigt ist ferner der Deckel 6, der im gezeigten Beispiel über ein randseitiges Innengewinde 36 auf ein entsprechendes Außengewinde 37 des Behältniskörpers 2 vorzugsweise abgedichtet aufzuschrauben ist. An der Unterseite des Deckels 6 ist eine zweite zentrierende Halterung 38 vorgesehen, die nach Art einer im Querschnitt dreieckförmigen und damit zentrierend wirkenden Nut ausgeführt ist. Sie dient zur Klemmhalterung des Innenteils 34 an der anderen Seite. Beim Aufschrauben des Deckels 6 legt sich die Halterung 38 am oberen Rand des Innenteils 34 an und drückt dieses gegen das Dichtelement 35, wodurch das Innenteil 34 einerseits zentriert und fixiert wird, andererseits auch die komplette Abdichtung im unteren wie im oberen Bereich, wo in der Nut ebenfalls ein solches Dichtelement vorgesehen sein kann, realisiert wird.

Weiterhin vorgesehen ist am Deckel 6 ein zylindrischer Ansatz 39, der einen Aufnahmeraum 40 für das fluide Nahrungsmittel bildet. Der Aufnahmeraum 40 ist mittig mit einer Durchbrechung 41 versehen, in die bei Bedarf der zweite Deckel, der hier nicht gezeigt ist, eingesetzt werden kann, um das zweite Abteil 4 zu verschließen. Sofern der zweite Deckel nicht vorgesehen bzw. benötigt ist, besteht die Möglichkeit, sowohl das zweite Abteil 4 als auch den Aufnahmeraum 40 mit Nahrungsmittel zu befüllen. Es kann also eine Überfüllung vorgenommen werden. Wird Nahrungsmittel aus dem zweiten Abteil 4 entnommen, so fließt vom Aufnahmeraum 40 die entsprechende Menge nach, so dass mit einer Füllung deutlich mehr Nahrungsmittel gekühft werden kann als in dem zweiten Abteil 4 selbst aufgenommen werden kann.

Wie Fig. 8 ferner zeigt, sind am Deckel 6 randseitige Vorsprünge 42 vorgesehen, die als Vertikalstege ausgeführt sind und als Schraubhilfe dienen. Das heißt, dass mit den Fingern beim Aufschrauben des Deckels 6 an diesen Vorsprüngen 42 angegriffen und gedreht werden kann. Selbstverständlich können um den Umfang mehrere solcher Schraubhilfen vorgesehen sein. Auch an dem Behältniskörper 2 sind an der Unterseite entsprechende Vorsprünge 43, die als eine solche Schraubhüfe dienen, vorgesehen, auch diese dienen der einfachen Verschraubung, wobei auch hier mehrere um den Umfang verteilt vorgesehen sein können.

Schließlich sind auch hier im Inneren des ersten Abteils vorgesehene Rippen 12 vorgesehen, die als Füllstandshöhenanzeige dienen können. Sie dienen gleichzeitig der Führung des Innenteils, nachdem dieses an jenen anliegt. Auch im Bereich des Aufnahmeraums 40 kann selbstverständlich eine entsprechende Füllstandshöhenanzeige vorgesehen sein.

## Patentansprüche

1. Behältnis zum Kühlen eines fluiden Nahrungsmittels, in dem wenigstens ein erstes Abteil (3) zur Aufnahme eines oder enthaltend ein Kühlmittel und wenigstens ein an das erste Abteil (3) unmittelbar angrenzendes zweites Abteil (4) zur Aufnahme des zu kühlenden, während des Kühlvorgangs ruhenden Nahrungsmittels ausgebildet ist, und das bodenseitig ein dem bis auf eine Einfüllöffnung für das Nahrungsmittel geschlossene zweiten Abteil (4) zugeordnetes und durch Aufsetzen des Behältnisses (1) auf ein Gefäß (26) automatisch offenbares, das Ablaufen des Nahrungsmittels in das Gefäß (26) ermöglichendes Ventil (16) aufweist.

2. Behältnis nach Anspruch 1, **dadurch gekennzeichnet, dass** es zur Bildung der beiden Abteile (3, 4) doppelwandig ausgebildet ist, wobei das zweite Abteil (4) innen liegt.

3. Behältnis nach Anspruch 1 oder 2, **dadurch gekennzeichnet, dass** im zweiten Abteil (4) oder im ersten Abteil, mit dem zweiten Abteil thermisch verbunden, eine oder mehrere Kühlrippen vorgesehen sind.

4. Behältnis nach einem der vorangehenden Ansprüche, **dadurch gekennzeichnet, dass** das Ventil (16) einen im Wesentlichen parallel zum Behältnisboden (19) verlaufenden, vertikal bewegbaren Betätigungsabschnitt (21) aufweist, der mit dem Gefäß (26) zusammenwirkt.

5. Behältnis nach Anspruch 4, **dadurch gekennzeichnet, dass** der Betätigungsabschnitt (21) zwei oder mehrere, sich seitlich erstreckende Arme (23) aufweist.

6. Behältnis nach Anspruch 4 oder 5, **dadurch gekennzeichnet, dass** bodenseitig eine Vertiefung (15) vorgesehen ist, in der der Betätigungsabschnitt (21) aufgenommen ist.

7. Behältnis nach einem der Ansprüche 4 bis 6, **dadurch gekennzeichnet, dass** bodenseitig mehrere Auflageabschnitte (28) für das den Betätigungsabschnitt (21) betätigende Gefäß (26) vorgesehen sind.

8. Behältnis nach einem der vorangehenden Ansprüche, **dadurch gekennzeichnet, dass** das der Öffnungsquerschnitt des Ventils (16) veränderbar ist.

9. Behältnis nach Anspruch 8, **dadurch gekennzeichnet, dass** der den Öffnungsquerschnitt bestimmende Betätigungsabschnitt (21) austauschbar ist.

10. Behältnis nach einem der Ansprüche 4 bis 9, **dadurch gekennzeichnet, dass** der Betätigungsabschnitt (21) lösbar mit einer Ventildichtung (20) verbunden ist.

11. Behältnis nach einem der vorangehenden Ansprüche, **dadurch gekennzeichnet, dass** außenseitig eine Isolierung vorgesehen ist.

12. Behältnis nach einem der vorangehenden Ansprüche, **dadurch gekennzeichnet, dass** es ein aus Kunststoff bestehendes Außenteil und ein aus Metall, insbesondere Aluminium bestehendes Innenteil, das die beiden Abteile (3, 4) trennt, aufweist.

13. Behältnis nach Anspruch 12**, dadurch gekennzeichnet, dass** das metallene Innenteil an einer am Boden des Behältnisses vorgesehenen zentrierenden Halterung vorzugsweise lösbar fixiert, insbesondere klemmgehaltert ist.

14. Behältnis nach einem der vorangehenden Ansprüche, **dadurch gekennzeichnet, dass** das erste Abteil (3) mittels eines Deckels (6) verschließbar ist, insbesondere bei außen liegendem ersten Abteil (3) mittels eines ringförmigen Deckels (6).

15. Behältnis nach Anspruch 13 und 14, **dadurch gekennzeichnet, dass** am Deckel eine zentrierende Halterung für das Innenteil, an der das Innenteil bei aufgesetztem Deckel fixiert, insbesondere klemmgehaltert ist, vorgesehen ist.

16. Behältnis nach Anspruch 14 oder 15, **dadurch gekennzeichnet, dass** am Deckel ein sich vom Behältnis weg erstreckender, vorzugsweise zylindrischer Ansatz vorgesehen ist, der einen Aufnahmeraum für das fluide Nahrungsmittel bildet und zum zweiten Abteil hin offen ist.

17. Behältnis nach einem der vorangehenden Ansprüche, **dadurch gekennzeichnet, dass** das zweite Abteil (4) mittels eines Deckels (8) verschließbar ist, insbesondere bei innen liegendem zweiten Abteil (4) mittels eines scheibenförmigen Deckels (8).

18. Behältnis nach einem der vorangehenden Ansprüche, **dadurch gekennzeichnet, dass** im ersten Abteil (3) und/oder im Aufnahmeraum eine Füllstandshöhenanzeige (12, 13) vorgesehen ist.

19. Behältnis nach Anspruch 18, **dadurch gekennzeichnet, dass** die Füllstandshöhenanzeige mittels mehrerer vorspringender Rippen (12, 13) gebildet ist.

20. Behältnis nach einem der vorangehenden Ansprüche, **gekennzeichnet durch** einen zugeordneten separaten Adapter (29) zum Aufsetzen auf ein einen zum Betätigen des Betätigungsabschnitts (21) nicht geeigneten Durchmesser des oberen Randes (30) aufweisendes Gefäß (26), welcher Adapter (29) einen vorzugsweise ringförmigen oberen Rand (31) zum Betätigen des Betätigungsabschnitts (21) aufweist.
